# EUROPÄISCHE PATENTSCHRIFT

(11) **EP 3 065 529 B1**
(45) Veröffentlichungstag und Bekanntmachung des Hinweises auf die Patenterteilung: **16.05.2018**
(21) Anmeldenummer: 14793506.8
(22) Anmeldetag: 30.10.2014
(51) Int. Cl.: A01C 7/06, A01C 7/00

(54) **SÄMASCHINE**
SOWING MACHINE
SEMOIR

(30) Priorität: 07.11.2013 DE 102013112228
(43) Veröffentlichungstag der Anmeldung: 14.09.2016
(73) Patentinhaber: Amazonen-Werke H. Dreyer GmbH & Co. KG, 49205 Hasbergen (DE)
(72) Erfinder: DREYER, (SA Samara) Heinz, 49205 Hasbergen (DE); DREYER, Justus, 49076 Osnabrück (DE); SCHWAMM, Victor, 49086 Osnabrück (DE); VOLLMER, Hubert, 49584 Fürstenau (DE)
(86) Internationale Anmeldenummer: PCT/EP2014/073312
(87) Internationale Veröffentlichungsnummer: WO 2015/067519

(56) Entgegenhaltungen:
- WO-A2-03/037064
- DE-A1- 3 142 341
- DE-A1-102006 055 525
- DE-A1-102008 050 735

## Beschreibung

Die Erfindung betrifft eine Sämaschine und ein Verfahren zur Ausbringung von Saatgut und Düngemitteln mit der Sämaschine gemäß der Oberbegriffe der Patentansprüche 1 und 9. Eine derartige Sämaschine und ein derartiges Verfahren zur Ausbringung von Saatgut und Düngemitteln mit einer entsprechend ausgerüsteten Sämaschine ist in der DE 10 2006 055 525 A1 beschrieben.

Eine weitere Sämaschine und ein weiteres Verfahren zur Ausbringung von Saatgut und Düngemitteln mit einer entsprechend ausgerüsteten Sämaschine ist in der DE 10 2009 013 771 A1 beschrieben. Bei dieser Sämaschine werden von dem Meißel eines Meißelsäschares Furchen in den Boden gerissen. In dieser Furche wird durch eine hinter dem Meißel angeordnete Saatzuleitung dem Säschar Saatgut zugeleitet, welches auf dem Furchengrund der Furche abgelegt wird. Mittels eines nachgeordneten Scharelementes wird Boden in die Furche gefördert. Auf dieser das Saatgut bedeckenden Bodenschicht wird dann über eine nachfolgende Düngerleitung eine größere Menge Dünger abgelegt. Dieser Dünger wird dann von nachfolgenden Tiefenführungselementen, die eine scheibenartige Seitenfläche aufweisen, wiederum mit Boden bedeckt. Die Vermischung des Düngers mit Boden ist hier unbefriedigend. Außerdem ist die zusätzliche Anordnung eines Scharelementes hinter dem Meißel aufwändig.

Eine weitere Sämaschine und ein weiteres Verfahren zur Ausbringung von Saatgut und Düngemitteln mit einer entsprechend ausgerüsteten Sämaschine ist in der DE 25 40 247 A1 beschrieben Bei dieser Sämaschine wird zunächst in Breitverteilung Dünger auf die Bodenoberfläche gestreut. Dies geschieht hier im Bereich von durch Packerringe in den Boden gedrückten Rillen. Anschließend wird der in den Rillen abgedeckte Dünger mit Boden bedeckt, indem bei dem Schaffen von Säfurchen durch nachfolgende Säschare Boden bewegt wird. Mittels der Säschare wird das Saatgut in der Säfurche abgelegt. Durch nachfolgende Saatstriegel werden Bodenteile zum Bedecken des Saatgutes in die Säfurche geschoben. Anschließend wird durch nachfolgende Druckrollen der Boden oberhalb der Säfurche angedrückt.

Bei dieser bekannten Maschine müssen mittels zusätzlicher vorlaufender Bodenwerkzeuge Rillen in den Boden gedrückt werden, damit größere Mengen Dünger getrennt von dem Saatgut im Boden abgelegt werden können.
Der Erfindung liegt die Aufgabe zu Grunde, eine vereinfachte Ausbringung des Düngers in größeren Mengen im Bereich des Saatgutes, jedoch getrennt von diesem im Boden abzulegen, vorzuschlagen.
Diese Aufgabe wird erfindungsgemäß dadurch gelöst, dass die jeweilige Auslassöffnung der Düngerausbringeinrichtung auf die jeweilige Tiefenführungsrolle ausgerichtet angeordnet ist.

Dadurch wird eine gute Platzierung des Düngers und dessen Vermischung mit dem Boden an der gewünschten Stelle im Boden erreicht. Infolge dieser Maßnahme lässt sich der Dünger in mit Boden vermischter Weise in der Nähe des Saatgutes in einfacher Weise platzieren. Weiterhin sind derartig angeordnete Tiefenführungsmittel dazu geeignet, den auf der Bodenoberfläche in Breitverteilung abgelegten Dünger oberflächennah im Bereich der Säfurche in den Boden einzuarbeiten. Somit sind die Düngerausbringeinrichtungen in einem Bereich angeordnet, in welchem der Boden sich in Bewegung findet und die Tiefenführungsmittel den Dünger vorteilhaft oberflächennah in dem Boden einarbeiten können. Durch die Einarbeitung des Düngers in dem Boden bzw. dem Vermischen mit Bodenteilen wird gewährleistet, dass die Inhaltsstoffe des Düngers nicht verdunsten.
Um den Dünger in einfacher Weise mit Boden zu vermischen, ist vorgesehen, dass die nachlaufenden Tiefenführungsmittel als zwei beabstandet zueinander angeordnete, frei drehbar gelagerte und einander zugewandte scheibenartige Seitenflächen aufweisende Tiefenführungsrollen ausgebildet sind. Hierdurch wird eine gute Vermischung des Düngers mit den Bodenteilen erreicht. Schließlich werden die Säschare in einfacher Weise in ihrer Eindringtiefe im Boden geführt. Außerdem wird eine zu große Bodenbewegung vermieden.

Um den Dünger mit dem Boden in ausreichender Weise verteilen und vermischen zu können, ist vorgesehen, dass zumindest ein Teil der aus dieser Auslassöffnung ausströmenden Düngemittel gegen Elemente der rotierenden Tiefenführungsrolle und/oder der Außenseite der scheibenartigen Seitenfläche prallen.

In einer weiteren Ausführungsform ist vorgesehen, dass zumindest ein Teil der aus dieser Auslassöffnung ausströmenden Düngemittel gegen Elemente der rotierenden Tiefenführungsrolle und/oder überwiegend vor der Tiefenführungsrolle auf den Boden auftreffen. Auch hier wird eine entsprechende Vermischung des Düngers mit dem Boden erreicht.

In einer weiteren Ausführungsform ist vorgesehen, dass zumindest ein Teil der aus dieser Auslassöffnung ausströmenden Düngemittel gegen Elemente der rotierenden Tiefenführungsrolle und/oder überwiegend im vorderen, mittleren und/oder hinteren Bereich der Tiefenführungsrolle auf den Boden auftreffen. Diese Anordnung kann bei speziellen Einsatzbedingungen vorteilhaft sein.
Um die Zuführung des Düngers zu optimieren und die jeweiligen Einsatzbedingungen anpassen zu können, ist vorgesehen, dass die Auslassöffnung der Düngerausbringeinrichtung verstellbar gegenüber der Tiefenführungsrolle angeordnet und in verschiedenen Positionen festsetzbar ist.
Um im Direktsäverfahren das Saatgut vorteilhaft ausbringen zu können, ist vorgesehen, dass die Säschare als jeweils einen Aufreißzinken aufweisende Meißelschare ausgebildet sind.

Um mit dem Säschar gleichzeitig Saatgut und Dünger ablegen zu können, ist vorgesehen, dass an den Säscharen Zuleitungen für Saatgut und Düngemittel zur gleichzeitigen Zuleitung von Saatgut und Düngemitteln angeordnet sind.

Um in einfacher Weise den so genannten Startdünger den Säscharen zu führen und im Boden ablegen zu können, ist vorgesehen, dass den Säscharen jeweils über die Zuleitungen zur Ablage in der von dem Säschar in den Boden gerissenen Säfurche die Samenkörner des auszubringenden Saatgutes zusammen mit dem als Startdünger dienenden Düngemitteln zuführbar sind.

Weiterhin ist ein Verfahren zur Ausbringung von Saatgut und Düngemitteln mit der vorgeschriebenen Sämaschine vorgesehen. Dieses Verfahren zeichnet sich dadurch aus, dass durch die Düngerausbringeinrichtungen die zugeführten Düngemittel in Breitverteilung im Bereich der Tiefenführungsrollen auf der Bodenoberfläche verteilt werden. In vorteilhafter Weise kann durch das Schaffen der Säfurche das aus dieser durch das jeweilige Säschar aufgeworfene Boden von den scheibenartigen Seitenflächen der Tiefenführungsrollen aufgefangen und zumindest teilweise in die Säfurche zur Bedeckung der in der Säfurche abgelegten Samenkörner und evtl. als Startdünger abgelegter Düngemittel zurückgeworfen werden.

Eine vorteilhafte Platzierung des auf der Bodenoberfläche in Breitverteilung abgelegten Düngers lässt sich verfahrensgemäß dadurch erreichen, dass die Vermischung der Bodenteile mit dem auf die Bodenoberfläche verstreuten Düngemittel durch das Auffangen und Zurückwerfen der Bodenteile durch die Tiefenführungsrollen erfolgt.

Die vorstehend erwähnte vorteilhafte Platzierung des auf der Bodenoberfläche in Breitverteilung abgelegten Düngers lässt sich gleichfalls dadurch erreichen, dass die Vermischung der Bodenteile mit dem auf die Bodenoberfläche verstreuten Düngemittel durch die Tiefenführungsrollen erfolgt.

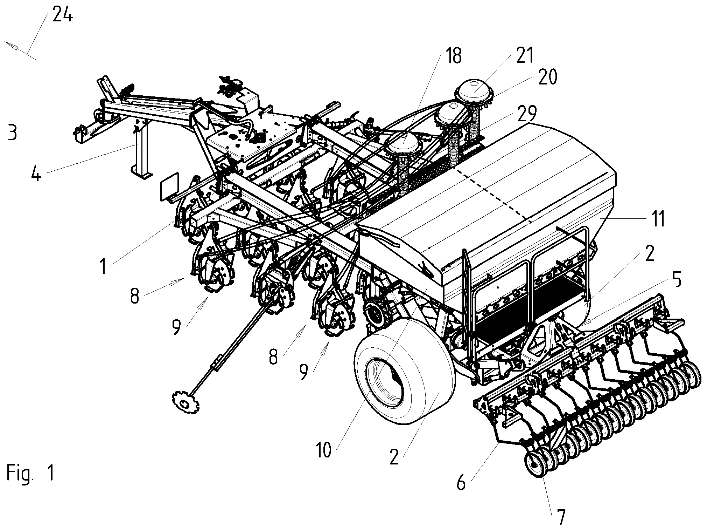

Weitere Einzelheiten der Erfindung sind der Beispielsbeschreibung und den Zeichnungen zu entnehmen. Die Zeichnungen zeigen
- Fig.1: als Direktsämaschine ausgebildete Sämaschine in Prinzipdarstellung und perspektivischer Darstellungsweise,

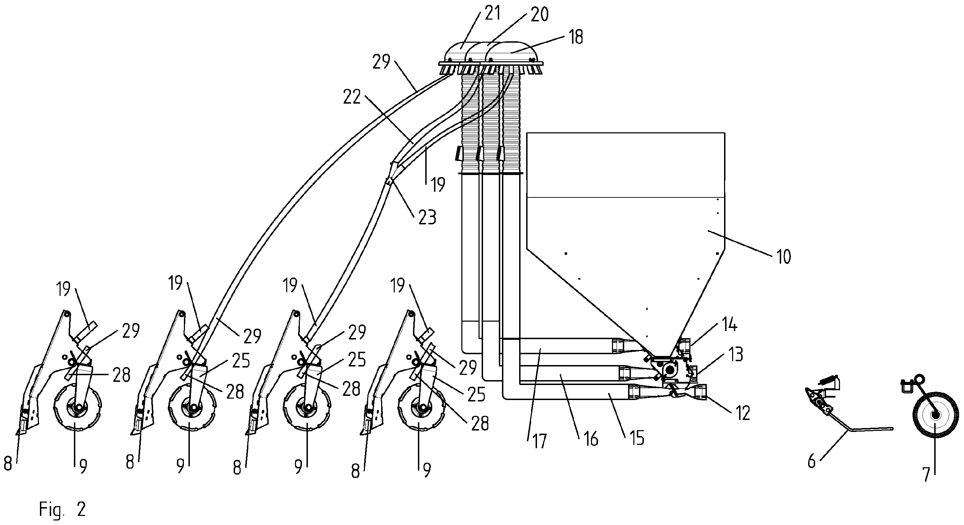

- Fig.2: als Direktsämaschine ausgebildete Sämaschine in Prinzipdarstellung, in Teil- und Seitenansicht,

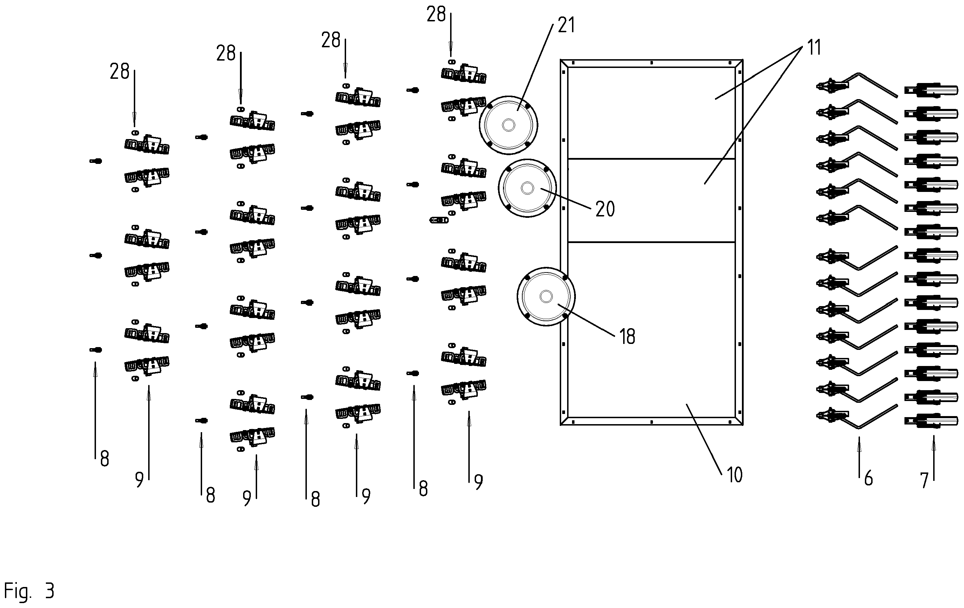

- Fig.3: als Direktsämaschine ausgebildete Sämaschine in Prinzipdarstellung, in Teilansicht- und Draufsicht,
- Fig.4: Verfahrensweise der Ablage und Einarbeitung Düngers in Prinzipdarstellung und Seitenansicht der Sämaschine,
- Fig.5: Verfahrensweise der Ablage und Einarbeitung Düngers in Prinzipdarstellung und Draufsicht der Sämaschine nach Fig. 4,
- Fig.6: eine weitere Verfahrensweise der Ablage und Einarbeitung Düngers in Prinzipdarstellung und Seitenansicht der Sämaschine,
- Fig.7: die Verfahrensweise der Ablage und Einarbeitung Düngers in Prinzipdarstellung und Draufsicht der Sämaschine nach Fig. 6,
- Fig.8: eine weitere Verfahrensweise der Ablage und Einarbeitung Düngers in Prinzipdarstellung und Seitenansicht der Sämaschine,
- Fig.9: die Verfahrensweise der Ablage und Einarbeitung Düngers in Prinzipdarstellung und Draufsicht der Sämaschine nach Fig. 8,
- Fig.10: die Anordnung der Düngerausbringeinrichtung gegenüber der scheibenartigen Seitenfläche der Tiefenführungsrolle,
- Fig.11: eine weitere Verfahrensweise der Ablage und Einarbeitung Düngers in Prinzipdarstellung und Seitenansicht der Sämaschine mit der Anordnung der Düngerausbringeinrichtung gegenüber der Tiefenführungsrolle gemäß Fig.10 und
- Fig.12: die Verfahrensweise der Ablage und Einarbeitung Düngers in Prinzipdarstellung und Draufsicht der Sämaschine nach Fig. 11.

Die Sämaschine zum Einsatz zur Direktsaat und zur Mulchsaat weist den langgestreckten Tragrahmen 1, der sich über Laufräder 2 auf dem Boden abstützt, auf. Der Tragrahmen 1 weist auf seiner Vorderseite die Zug- und Kupplungseinrichtung 3 zum Ankuppeln an den Dreipunktkraftheber eines Ackerschleppers auf. An der Kupplungseinrichtung 3 können die höhenverstellbaren Abstellstützen 4 angeordnet sein. An der Rückseite des Tragrahmens 1 ist die mittels Hydraulikelemente hydraulisch anhebbare und absenkbare Kuppeleinrichtung 5 zum Ankuppeln von Arbeitswerkzeugen, z.B. Striegeln 6 und Andrückrollen 7 angeordnet. Vor den Laufrädern 2 sind an dem Tragrahmen 1 über Trageinrichtungen die Meißelsäschare 8 mit den Rollen 9 angeordnet, die die Meißelsäschare 8 in ihrer Tiefe in den Boden führen. An dem Tragrahmen 1 sind der Vorratsbehälter 10 für Saatgut und zumindest ein Vorratsbehälter 11 für Dünger angeordnet. Dem Vorratsbehälter 10 für Saatgut ist die Dosiereinrichtung 12 und dem Vorratsbehälter 11 für Dünger sind die beiden Dosiereinrichtungen 13 und 14 zugeordnet. Die Dosiereinrichtungen 12, 13 und 14 speisen in einstellbarer Weise in bekannter und daher nicht näher erläuterter Weise jeweils das dosierte Saatgut und den dosierten Dünger über Schleusen in die mit einem eine pneumatischen Förderluftstrom beaufschlagten Förderleitungen 15, 16 und 17 ein. Über die Förderleitung 15 wird das sich im Vorratsbehälter 10 befindliche Saatgut den Säscharen 8 über den Verteilerkopf 18 den Saatleitungen 19 zugeführt. Weiterhin wird über die Förderleitungen 16 und 17 der sich im Vorratsbehälter 11 für Dünger befindliche Dünger den Verteilerköpfen 20 und 21 zugeleitet.

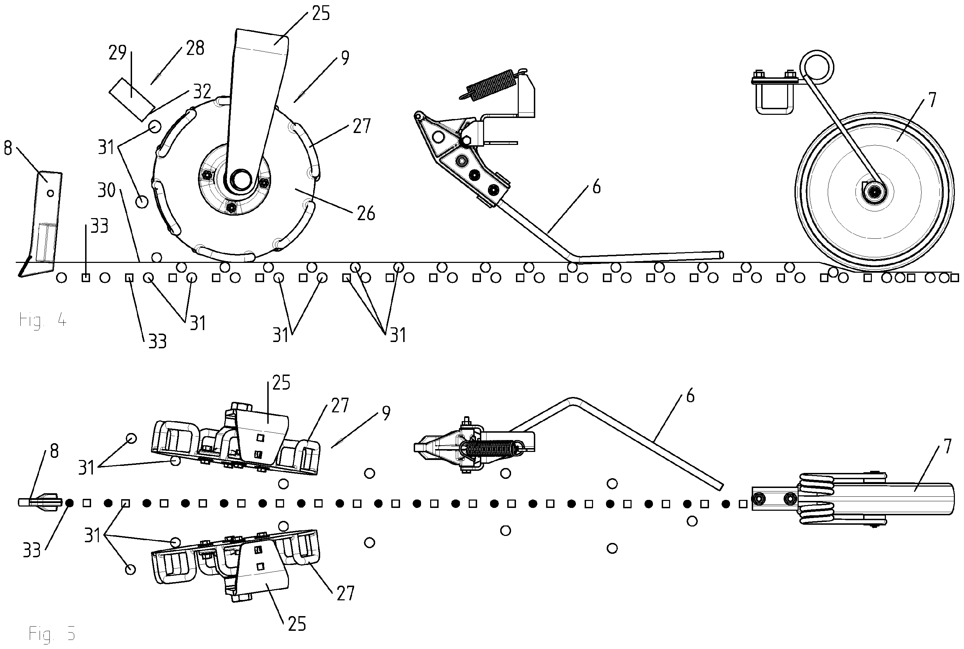

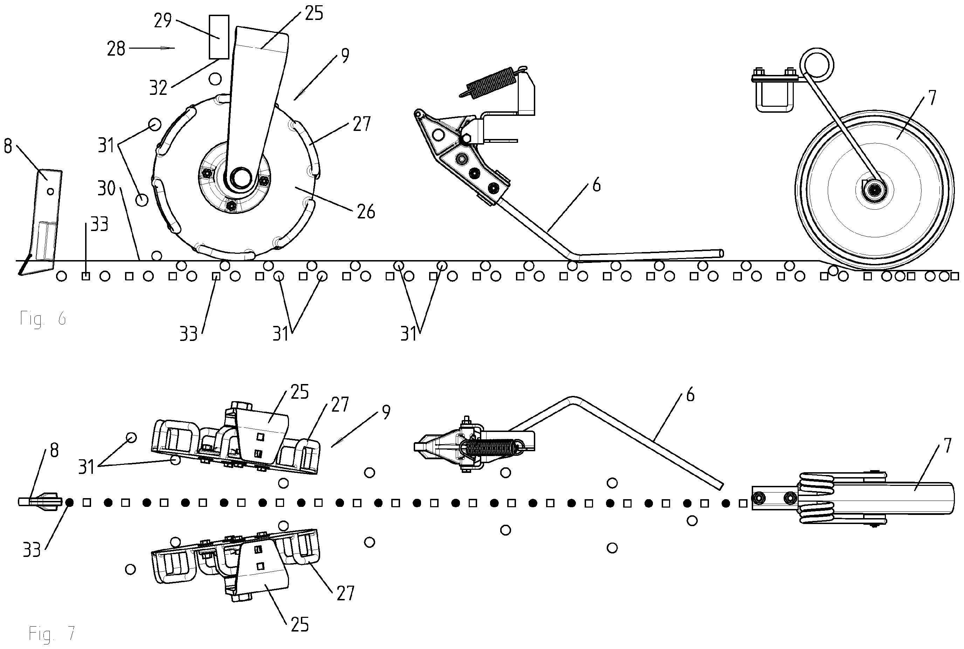

Von dem Verteilerkopf 20 führen Düngerzuleitungen 22 und so die Einschleusweiche 23, die in der Saatleitung 19 angeordnet ist, zu den einzelnen Säscharen 8. Über diese Zuleitungen 19 wird den einzelnen Säscharen 8 der so genannte Startdünger zur gemeinsamen Ablage mit dem Saatgut in der von den Säscharen 8 geschaffenen Säfurchen abgelegt.
Jedem Meißelsäschar 8 sind in bekannter Weise zwei Tiefenführungsrollen 9 zugeordnet entgegengesetzt schräg und zu einem sich in Fahrtrichtung 24 öffnenden V angestellt sind, angeordnet. Die beiden Rollen 9 sind mittels einer zwischen den Rollen 9 angeordneten Halterung 25 an dem Schar 8 befestigt. Die Rollen 9 sind derart schräg zur Fahrtrichtung 24 angestellt, dass in Draufsicht gesehen die Mittellinie der Rollen 9 mit der Fahrtrichtung 24 liegenden Geraden einen Winkel zwischen 5° und 10°, vorzugsweise etwa 8° einschließt. Weiterhin sind die Rollen 9 in bekannter Weise zu einem sich nach oben öffnenden V angestellt. Die einem Säschar 8 zugeordneten Rollen 9 sind in einem derartigen Abstand zueinander angeordnet, dass sie auf der in Fahrtrichtung 24 hinteren Seite einen Abstand aufweisen, der zumindest etwa der Breite des Säschares 8 entspricht.
Die Rollen 9 weisen eine scheibenförmige Halterungsscheibe 26 auf, die als Ringscheibe ausgebildet ist. An dem freien äußeren umlaufenden Randbereich der scheibenartigen und ebenen flachen Halterungsscheibe 26 sind in axialer Richtung abstehende Stütz- oder Druckstäbe 27 angeordnet. Die Stütz- und Druckstäbe 27 sind U- oder ringförmig ausgestaltet. Die stabförmigen Druckelemente 27 sind jeweils in dem äußeren radialen Bereich der Ringscheibe 26 beabstandet zueinander angeordnet und weisen zumindest annähernd in axialer Richtung. Die Stütz- und Druckelemente 27 weisen einen runden Querschnitt auf. Der äußere Aufstandsbereich der Stütz- und/oder Druckelemente 27 sind mit einem Winkel von zumindest 90° zur Halterungsscheibenebene angeordnet, und zwar derart, dass der jeweilige Aufstandsbereich des jeweiligen Stütz- und/oder Druckelementes in der untersten Position des jeweiligen Stütz- und/oder Druckelementes zumindest annähernd horizontal ausgerichtet ist.
Hinter den Säscharen 8 im Bereich der Tiefenführungsrollen 9 sind die Düngerausbringeinrichtungen 28, die zur Ablage des Düngers in Breitverteilung auf der Bodenoberfläche geeignet sind, angeordnet. Diesen Düngerausbringeinrichtungen 28 wird vom Verteilerkopf 21 der sich im Vorratsbehälter 11 für Dünger befindliche Dünger über die Düngerzuleitungen 29 in einstellbarer Weise zugeleitet. Die Vermischung der Bodenteile mit dem auf die Bodenoberfläche verstreuten Düngemittel erfolgt vor allem durch das Auffangen und Zurückwerfen der Bodenteile durch die Tiefenführungsrollen 9. Bei dem Ausführungsbeispiel und der Fig. 4 und 5 ist die Ausgabeöffnung 32 der Leitung 29 auf den vorderen Bereich der Tiefenführungsrolle 9 gerichtet.
Die Funktionsweise der Sämaschine ist folgende:
Über die an dem Rahmen 1 der Sämaschine angeordneten Düngerausbringeinrichtungen 28 werden die zugeführten Düngemittel 31 in Breitverteilung hinter den Säscharen 8 im Bereich der Tiefenführungsrollen 9 auf der Bodenoberfläche 30 verteilt. Die auf der Bodenoberfläche verteilten Düngemittel 31 werden durch die Tiefenführungsrollen zumindest teilweise mit den Bodenteilen der oberen Bodenschicht vermischt. Dies erfolgt vor allem des durch das Schaffen der Säfurche aus dieser durch das jeweilige Säschar 8 aufgeworfenen und sich Bewegung befindlichen Bodens von den scheibenartigen Seitenflächen 26 der Tiefenführungsrollen 9, der von diesen aufgefangen und zumindest teilweise in die Säfurche zur Bedeckung der in der Säfurche abgelegten Samenkörner 33 und Düngemittel 31 zurückgeworfen wird. Die Vermischung der Bodenteile mit dem auf die Bodenoberfläche 30 verstreuten Düngemittel 31 wird durch das Auffangen und Zurückwerfen der Bodenteile durch die Tiefenführungsrollen 9 durchgeführt. Die Vermischung der Bodenteile mit dem auf die Bodenoberfläche 31 verstreuten Düngemittel 28 erfolgt also im Wesentlichen durch die Tiefenführungsrollen 9.
Die Ausführung gemäß den Fig. 6 und 7 unterscheidet sich von den vorhergehenden Fig. 4 und 5 dadurch, dass die jeweilige Auslassöffnung 32 der Düngerausbringeinrichtung 28 auf die jeweilige Tiefenführungsrolle 9 ausgerichtet ist, dass zumindest ein Teil der aus dieser Auslassöffnung ausströmenden Düngemittel gegen Elemente der rotierenden Tiefenführungsrolle und/oder überwiegend im vorderen, mittleren Bereich der Tiefenführungsrolle 9 auf den Boden auftreffen.

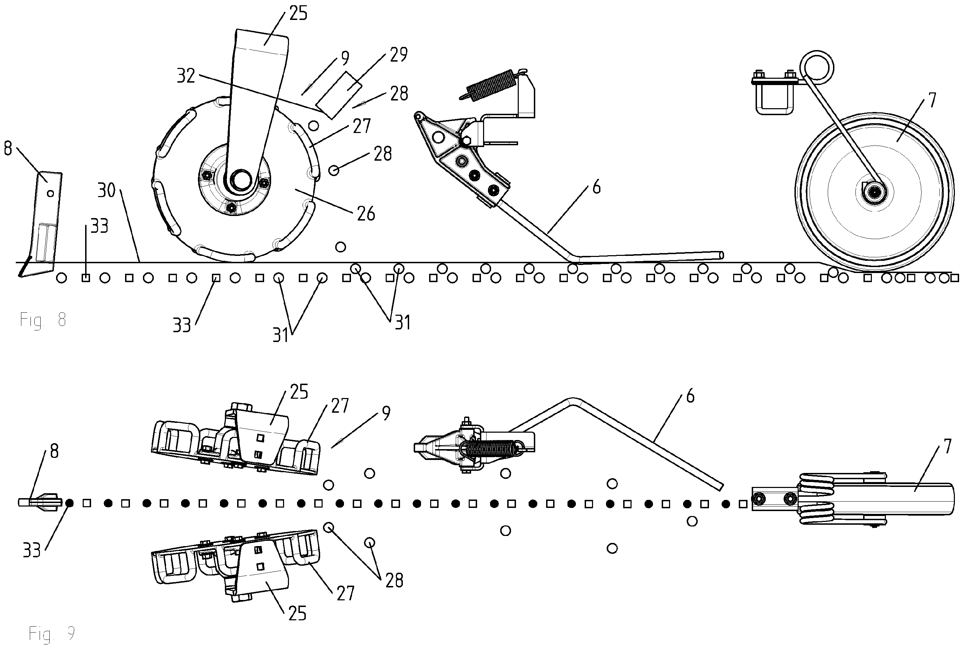

Die Ausführung gemäß den Fig. 8 und 9 unterscheidet sich von den vorhergehenden Fig. 4 und 5 dadurch, dass die jeweilige Auslassöffnung 32 der Düngerausbringeinrichtung 28 auf die jeweilige Tiefenführungsrolle 9 ausgerichtet ist, dass zumindest ein Teil der aus dieser Auslassöffnung ausströmenden Düngemittel gegen Elemente der rotierenden Tiefenführungsrolle und/oder überwiegend im hinteren Bereich der Tiefenführungsrolle 9 auf den Boden auftreffen.

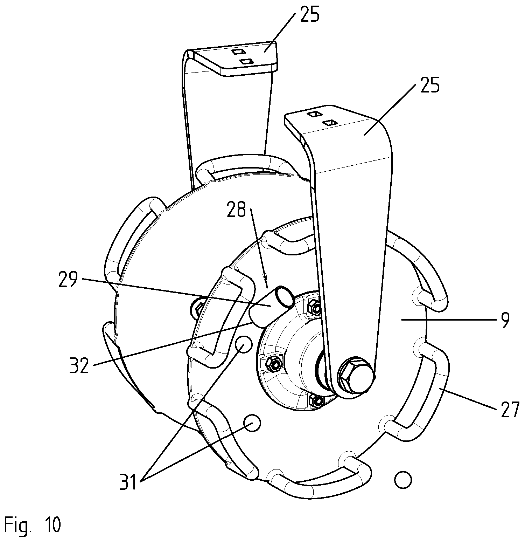

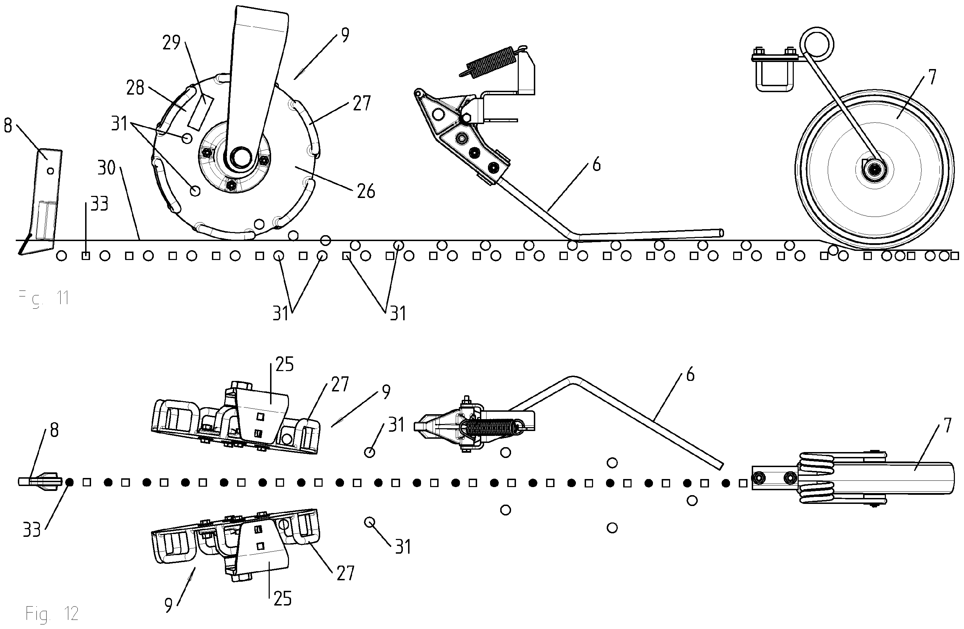

Die Ausführung gemäß den Fig. 10 bis 12 unterscheidet sich von den vorhergehenden Fig. 4 und 5 dadurch, dass die jeweilige Auslassöffnung 32 der Düngerausbringeinrichtung 28 schräg auf die scheibenartige äußere Seitenfläche der jeweiligen Tiefenführungsrolle 9 ausgerichtet ist, wie Fig.10 zeigt, Somit wird zumindest ein Teil der aus dieser Auslassöffnung ausströmenden Düngemittel gegen Elemente der rotierenden auftreffen und von dieser entsprechend verteilt.

Es sei noch angemerkt, dass die Auslassöffnung 32 der Düngerausbringeinrichtung 28 verstellbar gegenüber der Tiefenführungsrolle 9 angeordnet und in verschiedenen Positionen festsetzbar angeordnet sein kann.

## Patentansprüche

1. Sämaschine, insbesondere Direktsämaschine mit einem sich auf dem Boden über Laufrädern abstützenden Rahmen, Vorratsbehältern für Saatgut und Düngemitteln und Säscharen, denen das sich in den Vorratsbehältern befindliche Saatgut und Düngemittel, sowie Düngerausbringeinrichtungen, denen das sich in dem Vorratsbehälter befindliche Düngemittel jeweils über Dosierorgane in einstellbaren Mengen zuführbar sind, wobei die Schare zum Einbringen des Saatgutes mit nachlaufenden Tiefenführungsmitteln ausgebildet und in mehreren Querreihen sowie hintereinander quer zur Fahrtrichtung beabstandet zueinander angeordnet sind, wobei hinter den Scharen zur Ausbringung der Düngemittel die in zumindest einer Querreihe angeordneten Düngerausbringeinrichtungen angeordnet sind, wobei die nachlaufenden Tiefenführungsmittel als zwei beabstandet zueinander angeordnete, frei drehbar gelagerte und einander zugewandte scheibenartige Seitenflächen aufweisende Tiefenführungsrollen ausgebildet sind, wobei die Düngerausbringeinrichtungen (28) im Bereich der nachlaufenden Tiefenführungsmittel (9) angeordnet sind, **dadurch gekennzeichnet, dass** die jeweilige Auslassöffnung (32) der Düngerausbringeinrichtung (28) auf die jeweilige Tiefenführungsrolle (9) ausgerichtet angeordnet ist.

2. Sämaschine nach Anspruch 1, **dadurch gekennzeichnet, dass** zumindest ein Teil der aus dieser Auslassöffnung (32) ausströmenden Düngemittel (31) gegen Elemente (26, 27) der rotierenden Tiefenführungsrolle (9) und/oder der Außenseite der scheibenartigen Seitenfläche (26) prallen.

3. Sämaschine nach Anspruch 1, **dadurch gekennzeichnet, dass** zumindest ein Teil der aus dieser Auslassöffnung (32) ausströmenden Düngemittel (31) gegen Elemente der rotierenden Tiefenführungsrolle (9) und/oder überwiegend vor der Tiefenführungsrolle (9) auf den Boden auftreffen.

4. Sämaschine nach Anspruch 1, **dadurch gekennzeichnet, dass** zumindest ein Teil der aus dieser Auslassöffnung (32) ausströmenden Düngemittel (31) gegen Elemente der rotierenden Tiefenführungsrolle (9) und/oder überwiegend im vorderen, mittleren und/oder hinteren Bereich der Tiefenführungsrolle (9) auf den Boden auftreffen.

5. Sämaschine nach zumindest einem der vorstehenden Ansprüche, **dadurch gekennzeichnet, dass** die Auslassöffnung (32) der Düngerausbringeinrichtung (28) verstellbar gegenüber der Tiefenführungsrolle (9) angeordnet und in verschiedenen Positionen festsetzbar ist.

6. Sämaschine nach zumindest einem der vorstehenden Ansprüche, **dadurch gekennzeichnet, dass** an den Säscharen (8) Zuleitungen (19) für Saatgut und Düngemitteln zur gleichzeitigen Zuleitung von Saatgut und Düngemitteln angeordnet sind.

7. Sämaschine nach zumindest einem der vorstehenden Ansprüche, **dadurch gekennzeichnet, dass** die Säschare (8) als jeweils einen Aufreißzinken aufweisende Meißelschare ausgebildet sind.

8. Sämaschine nach zumindest einem der vorstehenden Ansprüche, **dadurch gekennzeichnet, dass** den Säscharen (8) jeweils über die Zuleitungen (19) zur Ablage in der von dem Säschar in den Boden gerissenen Säfurche die Samenkörner des auszubringenden Saatgutes zusammen mit dem als Startdünger dienenden Düngemitteln zuführbar sind.

9. Verfahren zur Ausbringung von Saatgut und Düngemitteln mit der Sämaschine gemäß einem oder mehreren der vorstehenden Ansprüche, **dadurch gekennzeichnet, dass** durch die Düngerausbringeinrichtungen (28) die zugeführten Düngemittel in Breitverteilung im Bereich der Tiefenführungsrollen (9) auf der Bodenoberfläche verteilt werden.

10. Verfahren nach Anspruch 9, **dadurch gekennzeichnet, dass** die Vermischung der Bodenteile mit dem auf die Bodenoberfläche verstreuten Düngemittel insbesondere durch das Auffangen und Zurückwerfen der Bodenteile durch die Tiefenführungsrollen (9) erfolgt.

11. Verfahren nach Anspruch 9, **dadurch gekennzeichnet, dass** die Vermischung der Bodenteile mit dem auf die Bodenoberfläche verstreuten Düngemittel durch die Tiefenführungsrollen (9) erfolgt.

## Claims

1. Seed drill, in particular direct seed drill, having a frame supported on the soil via wheels, having storage hoppers for seed material and fertilizers, and having seed coulters, to which the fertilizer and seed material located in the storage hoppers can be fed in adjustable quantities in each case via metering mechanisms, and having fertilizer spreaders, to which the fertilizer located in the storage hopper can be fed in adjustable quantities via metering mechanisms, wherein the coulters for introducing the seed material are designed with trailing depth-control means and are spaced apart from one another in a plurality of transverse rows and one behind the other in a direction transverse to the direction of travel, wherein the fertilizer spreaders, arranged in at least one transverse row, are arranged behind the coulters for spreading the fertilizers, wherein the trailing depth-control means are designed in the form of two spaced-apart, freely rotatably mounted depth-control rollers having disc-like side surfaces facing one another, wherein the fertilizer spreaders (28) are arranged in the region of the trailing depth-control means (9), **characterized in that** the respective outlet opening (32) of the fertilizer spreader (28) is arranged in alignment with the respective depth-control roller (9).

2. Seed drill according to Claim 1, **characterized in that** at least some of the fertilizers (31) flowing out of said outlet opening (32) strike against elements (26, 27) of the rotating depth-control roller (9) and/or of the outer side of the disc-like side surface (26).

3. Seed drill according to Claim 1, **characterized in that** at least some of the fertilizers (31) flowing out of said outlet opening (32) come into contact against elements of the rotating depth-control roller (9) and/or with the soil predominantly in front of the depth-control roller (9).

4. Seed drill according to Claim 1, **characterized in that** at least some of the fertilizers (31) flowing out of said outlet opening (32) come into contact against elements of the rotating depth-control roller (9) and/or with the soil predominantly in the front, central and/or rear region of the depth-control roller (9).

5. Seed drill according to at least one of the preceding claims, **characterized in that** the outlet opening (32) of the fertilizer spreader (28) is arranged in an adjustable manner in relation to the depth-control roller (9) and can be secured in different positions.

6. Seed drill according to at least one of the preceding claims, **characterized in that** supply lines (19) for seed material and fertilizers are arranged on the seed coulters (8) for the purpose of supplying seed material and fertilizers simultaneously.

7. Seed drill according to at least one of the preceding claims, **characterized in that** the seed coulters (8) are designed in the form of chisel coulters each having a ripping tine.

8. Seed drill according to at least one of the preceding claims, **characterized in that** the seeds of the seed material which is to be spread, together with the fertilizers in the form of start fertilizers, can be fed to the seed coulters (8), via the supply lines (19) in each case, in order to be deposited in the seed furrow made in the soil by the seed coulter.

9. Method of spreading seed material and fertilizers using the seed drill according to one or more of the preceding claims, **characterized in that** the fertilizers fed are distributed widely over the soil surface, in the region of the depth-control rollers (9), by the fertilizer spreaders (28).

10. Method according to Claim 9, **characterized in that** the soil components are mixed with the fertilizer spread over the soil surface in particular by virtue of the soil components being picked up and thrown back by the depth-control rollers (9).

11. Method according to Claim 9, **characterized in that** it is the depth-control rollers (9) which mix the soil components with the fertilizer spread over the soil surface.

## Revendications

1. Semoir, en particulier semoir direct avec un châssis prenant appui sur le sol au moyen de roues, avec des réservoirs de stockage pour des semences et des engrais et avec des socs semeurs, auxquels les semences et les engrais se trouvant dans les réservoirs de stockage, ainsi qu'avec des dispositifs de dépôt d'engrais, auxquels l'engrais se trouvant dans le réservoir de stockage, peuvent être amenés respectivement en quantités réglables au moyen d'organes de dosage, dans lequel les socs sont configurés de façon à déposer les semences avec des moyens de guidage de profondeur qui suivent et sont disposés en plusieurs rangées transversales et l'un derrière l'autre à distance l'un de l'autre transversalement à la direction de déplacement, dans lequel les dispositifs de dépôt d'engrais disposés en au moins une rangée transversale sont disposés derrière les socs pour le dépôt de l'engrais, dans lequel les moyens de guidage de profondeur qui suivent sont réalisés sous la forme de rouleaux de guidage de profondeur disposés à distance l'un de l'autre, montés de façon librement rotative et présentant des faces latérales en forme de disques tournées l'une vers l'autre, dans lequel les dispositifs de dépôt d'engrais (28) sont disposés dans la région des moyens de guidage de profondeur qui suivent (9), **caractérisé en ce que** l'ouverture de sortie respective (32) du dispositif de dépôt d'engrais (28) est disposée de façon orientée vers le rouleau de guidage de profondeur respectif (9).

2. Semoir selon la revendication 1, **caractérisé en ce qu'**au moins une partie de l'engrais (31) sortant par cette ouverture de sortie (32) frappe des éléments (26, 27) du rouleau de guidage de profondeur tournant (9) et/ou le côté extérieur de la face latérale en forme de disque (26).

3. Semoir selon la revendication 1, **caractérisé en ce qu'**au moins une partie de l'engrais (31) sortant par cette ouverture de sortie (32) frappe des éléments du rouleau de guidage de profondeur tournant (9) et/ou arrive sur le sol principalement devant le rouleau de guidage de profondeur (9).

4. Semoir selon la revendication 1, **caractérisé en ce qu'**au moins une partie de l'engrais (31) sortant par cette ouverture de sortie (32) arrive contre des éléments du rouleau de guidage de profondeur tournant (9) et/ou sur le sol principalement dans la région avant, moyenne et/ou arrière du rouleau de guidage de profondeur (9).

5. Semoir selon au moins une des revendications précédentes, **caractérisé en ce que** l'ouverture de sortie (32) du dispositif de dépôt d'engrais (28) est disposée de façon déplaçable par rapport au rouleau de guidage de profondeur (9) et peut être fixée dans différentes positions.

6. Semoir selon au moins une des revendications précédentes, **caractérisé en ce que** des conduites d'amenée (19) pour des semences et des engrais sont disposées sur les socs semeurs (8) pour l'amenée simultanée de semences et d'engrais.

7. Semoir selon au moins une des revendications précédentes, **caractérisé en ce que** les socs semeurs (8) sont réalisés respectivement sous la forme de socs à carrelet présentant une dent d'arrachage.

8. Semoir selon au moins une des revendications précédentes, **caractérisé en ce que** les graines des semences à déposer peuvent être amenées en même temps que les engrais servant d'engrais de démarrage aux socs semeurs (8) respectivement par les conduites d'amenée (19) pour leur dépôt dans le sillon creusé dans le sol par le soc semeur.

9. Procédé de dépôt de semences et d'engrais avec le semoir selon une ou plusieurs des revendications précédentes, **caractérisé en ce que** l'on répartit les engrais amenés sur la surface du sol au moyen des dispositifs de dépôt d'engrais (28) avec une répartition large dans la région des rouleaux de guidage de profondeur (9).

10. Procédé selon la revendication 9, **caractérisé en ce que** l'on opère le mélange des portions de sol avec l'engrais répandu sur la surface du sol en particulier en prenant et en rejetant les portions de sol au moyen des rouleaux de guidage de profondeur (9).

11. Procédé selon la revendication 9, **caractérisé en ce que** l'on effectue le mélange des portions de sol avec l'engrais répandu sur la surface du sol au moyen des rouleaux de guidage de profondeur (9).
